# FASCICULE DE BREVET EUROPEEN

(11) **EP 0 670 971 B1**
(45) Date de publication et mention de la délivrance du brevet: **28.07.1999**
(21) Numéro de dépôt: 94927702.4
(22) Date de dépôt: 20.09.1994
(51) Int. Cl.: F16D 25/08, F16D 25/12

(54) **EMBRAYAGE DE VEHICULE AUTOMOBILE A ACTIONNEMENT HYDRAULIQUE COMPORTANT DES MOYENS D'INDICATION D'USURE**
HYDRAULISCH BETÄTIGTE KRAFTFAHRZEUGKUPPLUNG MIT VERSCHLEISSANZEIGEMITTEL
HYDRAULIC MOTOR VEHICLE CLUTCH WITH WEAR INDICATING MEANS

(30) Priorité: 29.09.1993 FR 9311576
(43) Date de publication de la demande: 13.09.1995
(73) Titulaire: VALEO, 75017 Paris (FR)
(72) Inventeur: VILLATA, Gino, I-14021 Buttigliera D'Asti (IT)
(74) Mandataire: Gamonal, Didier
(86) Numéro de dépôt international: FR9401094
(87) Numéro de publication internationale: WO9509311

(56) Documents cités:
- EP-A- 0 497 164
- DE-A- 2 815 971
- DE-C- 3 044 746
- FR-A- 2 674 922
- GB-A- 2 110 334
- GB-A- 2 124 321
- GB-A- 2 174 169

## Description

La présente invention concerne un embrayage à friction, notamment pour véhicule automobile.

L'invention concerne plus particulièrement un embrayage à friction du type à actionnement hydraulique.

On connaît différentes conceptions d'un embrayage qui comportent un dispositif hydraulique d'actionnement comportant au moins un piston d'actionnement, qui est susceptible de solliciter axialement en déplacement la butée de débrayage pour provoquer le débrayage lorsque le dispositif d'actionnement est alimenté en fluide sous pression provenant d'une source de fluide sous pression, telle que par exemple un cylindre émetteur d'embrayage.

Un exemple d'un tel embrayage à actionnement hydraulique est décrit et représenté dans le document US-A-3.955.660 dans lequel le piston d'actionnement est réalisé sous la forme d'un manchon cylindrique monté coulissant sur une portée cylindrique de guidage fixée au carter d'embrayage.

Un tel type d'embrayage à actionnement hydraulique, qui ne comporte pas de fourchette mécanique d'actionnement de la butée de débrayage, ne permet pas de réaliser indirectement la mesure de l'usure des garnitures de friction de l'embrayage par visualisation de la position relative de l'extrémité de la fourchette d'actionnement située à l'extérieur du carter d'embrayage par rapport à une référence fixe de ce dernier.

Un tel type d'embrayage à actionnement hydraulique comporte également d'autres inconvénients parmi lesquels ceux liés à l'alimentation en fluide sous pression de la chambre d'actionnement du piston hydraulique, qui nécessite de faire appel à au moins une conduite d'alimentation en fluide sous pression qui s'étend à l'intérieur du carter d'embrayage, qui doit être reliée hydrauliquement à la chambre d'actionnement et à la source de fluide sous pression et pour la bonne résistance de laquelle il est en général nécessaire de prévoir des moyens d'immobilisation en rotation du piston d'actionnement.

Dans le document GB-A-2 174 169, conforme qu préambule de la revendication 1, il est prévu un organe d'indication d'usure dépaçable par le piston d'actionnement mais non visible de manière aisée de l'extérieur du carter d'embrayage.

La présente invention a pour but de proposer une nouvelle conception d'un embrayage à actionnement hydraulique qui remédie aux inconvénients qui viennent d'être mentionnés.

Dans ce but, l'invention propose un embrayage à friction du type comportant un carter d'embrayage à l'intérieur duquel est agencé un dispositif de commande du débrayage qui comporte une butée de débrayage et un dispositif hydraulique d'actionnement comportant au moins un piston d'actionnement lié en translation axiale à la butée de débrayage pour solliciter axialement en déplacement ladite butée, dans lequel il est prévu un dispositif d'indication de l'usure des garnitures de friction de l'embrayage comportant un organe d'indication d'usure qui est lié en translation axiale avec le piston d'actionnement caractérisé en ce que l'organe d'indication d'usure est reliée à articulation au piston d'actionnement (26) et fait saillie à l'extérieur du carter à la faveur d'une ouverture dudit carter pour transmettre une information relative aux déplacements du piston d'actionnement.

Grâce à l'invention on peut mesurer l'usure des garnitures de friction et ce de manière visuelle du fait que le dispositif d'indication fait saillie à l'extérieur du carter.

En outre grâce à l'ouverture le piston peut être immobilisé en rotation par coopération du dispositif d'indication avec le bord correspondant de l'ouverture.

Avantageusement pour ce faire, ladite ouverture a une forme oblongue en étant allongée parallèlement à l'axe de coulissement axial du piston.

La dimension de l'ouverture dépend des applications et notamment de l'usure des garnitures de friction.

Selon d'autres caractéristiques de l'invention :
- une première extrémité de l'organe d'indication d'usure est reliée à articulation au piston d'actionnement et la seconde extrémité de l'organe fait saillie à travers une fenêtre du carter pour se déplacer en regard d'un organe de mesure des déplacements de cette seconde extrémité ;
- l'organe de mesure est une échelle graduée de mesure visuelle des déplacements de la seconde extrémité de l'organe d'indication d'usure ;
- la seconde extrémité de l'organe d'indication d'usure comporte un frotteur qui coopère avec un potentiomètre électrique du type rhéostatique ;
- une première extrémité de l'organe d'indication d'usure est liée en translation axiale au piston et est articulée sur ce dernier autour d'un axe d'articulation perpendiculaire à l'axe de coulissement axial du piston ;
- l'axe d'articulation de l'organe d'indication d'usure est décalé radialement par rapport à l'axe du piston ;
- la première extrémité de l'organe d'indication d'usure est en forme de fourchette ;
- le dispositif hydraulique d'actionnement comporte un circuit d'alimentation en fluide sous pression comportant au moins une conduite d'alimentation qui relie la chambre d'actionnement du piston à une source de fluide sous pression agencée à l'extérieur du carter, et au moins une partie de la conduite est formée dans le corps de l'organe d'indication d'usure ;
- le corps de l'organe d'indication d'usure comporte un canal longitudinal dont une première extrémité est reliée à la chambre d'actionnement du piston à travers des moyens d'articulation de la première extrémité de l'organe d'indication d'usure sur le piston ;
- la seconde extrémité du canal débouche à l'extérieur du carter d'embrayage ; et
- le circuit d'alimentation comporte une conduite de purge dont au moins une partie est formée dans le corps de l'organe d'indication d'usure. Cet organe porte une vis de purge associée à la conduite de purge.

Ainsi on peut effectuer la purge de l'extérieur du carter dans un lieu plus accessible. Bien entendu la vis de purge, en variante, peut être située extérieurement au corps de l'organe indicateur d'usure.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en section axiale illustrant une partie d'un carter d'embrayage et du dispositif d'actionnement de la butée de débrayage comportant des moyens d'indication d'usure réalisés conformément aux enseignements de l'invention ; et
- la figure 2 est une vue en section selon la ligne 2-2 de la figure 1.

On a illustré sur les figures un carter d'embrayage 10 appartenant à un embrayage à friction de véhicule automobile du type tiré et à actionnement hydraulique. L'ensemble de l'embrayage n'est pas illustré sur les figures et ne sera pas décrit en détail et on pourra notamment se reporter aux documents US-A-3,995,660 et FR-A-2 304 826 pour en connaître divers exemples de réalisation.

Pour mémoire on notera que cet embrayage comporte un disque de friction, solidaire en rotation de l'arbre d'entrée de la boîte de vitesses dont les garnitures de friction sont propres à être serrées entre les plateaux de pression et de réaction de l'embrayage. Ces plateaux sont solidaires en rotation du vilebrequin du moteur, le plateau de pression étant mobile axialement par rapport au plateau de réaction.

Des moyens élastiques à action axiale, tels qu'un diaphragme ou des ressorts à boudin associés à des leviers de débrayage, sollicitent le plateau de pression en direction du plateau de réaction pour serrage des garnitures de friction.

Ces moyens élastiques prennent appui pour ce faire sur un couvercle solidaire du plateau de réaction.

Pour désengager l'embrayage on agit sur l'extrémité des doigts du diaphragme ou des leviers de débrayage, formant le dispositif débrayeur de l'embrayage, à l'aide de la butée de débrayage 20 commandée ici en traction par le dispositif d'actionnement hydraulique comportant, de manière décrite ci-après, un piston 26,34 mobile axialement, un organe de guidage 16 fixe axialement, une chambre hydraulique d'actionnement 38 du piston 26,34, un circuit d'alimentation en fluide sous pression.

Lorsque les garnitures de friction s'usent, le plateau de pression se rapproche du plateau de réaction, le diaphragme s'incline et la butée de débrayage 20, attelée au diaphragme, se déplace axialement en fonction de l'inclinaison du diaphragme.

La position de la butée de débrayage 20 varie donc en fonction de l'usure des garnitures de friction.

Le carter 10 est en forme générale de cloche et présente une paroi radiale d'extrémité 12 sur la surface interne 14 de laquelle est fixée axialement et en rotation une douille 16, également appelée trompette, qui délimite une surface externe de portée cylindrique 18 d'axe axial X-X.

Le carter 10 renferme notamment une butée de débrayage 20, qui est constituée pour l'essentiel par un roulement à billes 22 dont la bague extérieure 24 est ici liée, ici par sertissage à la faveur d'un capot (non référencé), en translation axiale à un manchon d'actionnement 26 et dont la bague intérieure 28 tournante se prolonge par une douille 30 comportant notamment une gorge radiale extérieure 32 prévue pour recevoir des moyens de solidarisation par emboîtement axial élastique(non représentés) avec une pièce d'accostage agissant ici sur le diaphragme de l'embrayage (non représenté).

La butée de débrayage 20 est donc liée en translation axiale au manchon d'actionnement 26, ledit manchon 26 agissant sur ladite butée 20 par l'une de ses extrémités.

Pour plus de précision on se reportera par exemple aux documents FR-A-2 653 195 (US-A-5,113,989) ou FR-A-2 304 826, lesdits moyens de solidarisation comportant un organe de couplage, tel qu'un jonc ou une rondelle à pattes, élastiquement déformable radialement et venant en prise avec le flanc avant de la gorge 32 et une portée d'une pièce d'accostage attelée aux leviers de débrayage ou le plus souvent à l'extrémité des doigts du diaphragme.

L'actionnement de la butée de débrayage 20 est réalisé au moyen d'un dispositif d'actionnement hydraulique comportant un piston d'actionnement formé par le corps cylindrique creux 34 du manchon 26, dont la surface cylindrique interne 36 coopère à l'arrière avec la portée cylindrique 18 pour délimiter une chambre hydraulique d'actionnement 38. La douille 16 forme donc un organe de guidage pour le piston 26,34, en étant ainsi en relation de cylindre piston avec celui-ci.

La chambre 38 est délimitée axialement par deux coupelles d'étanchéité 40 et 42 portées respectivement par le piston 26, 34 et par la trompette 16. Pour cela l'extrémité arrière du piston 26,34 présente une collerette dirigée vers l'axe de l'ensemble tandis que la douille 16 porte à son extrémité avant une bague calée axialement à l'aide d'un circlips. Les coupelles 40,42 s'appuient respectivement sur ladite collerette et ladite bague avec interposition d'un ressort de précharge sollicitant la butée 20 et le piston 26,34 en direction de la paroi 12, pour exercer une précharge sur l'embrayage et favoriser, de manière connue en soi, un bon fonctionnement du roulement de la butée 20.

Bien entendu il est prévu un soufflet entre l'extrémité arrière du piston 26,34 et l'extrémité arrière de la douille 16.

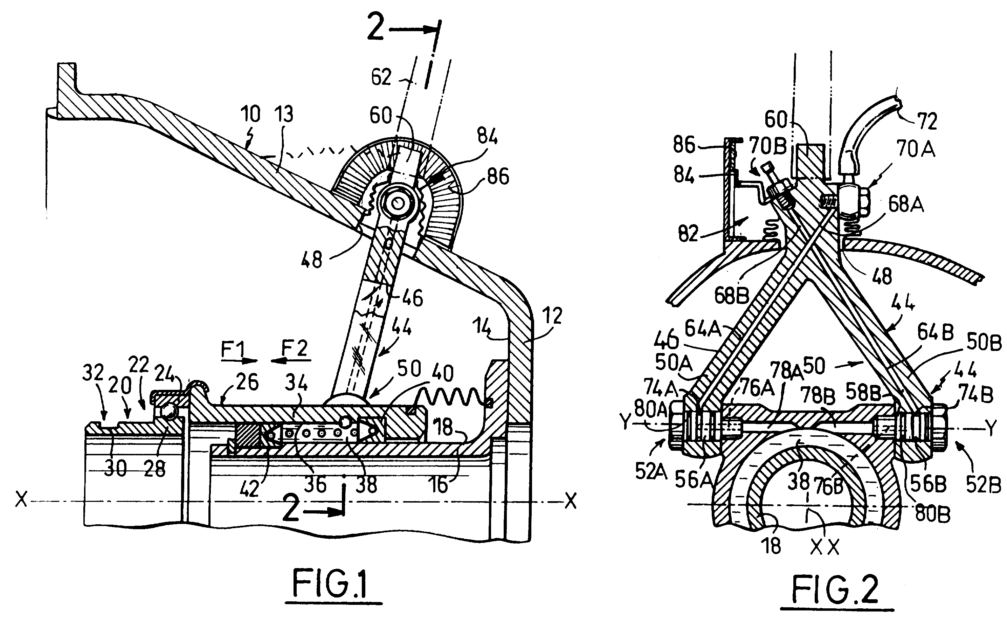

Lorsque la chambre d'actionnement 38 est alimentée en fluide sous pression, par des moyens qui seront décrits par la suite, il se produit un déplacement axial du piston 26,34 selon la direction X-X et dans le sens F1, de la gauche vers la droite en considérant la figure 1, de manière à provoquer un débrayage (ou désengagement) de l'embrayage par l'intermédiaire de la butée de débrayage 20 agissant, par l'intermédiaire de la pièce d'accostage, en traction sur le dispositif débrayeur de l'embrayage (le diaphragme ou les leviers de débrayage).

Conformément à l'invention, il est prévu un organe d'indication d'usure des garnitures de friction (non représentées) du disque de friction de l'embrayage, qui est réalisé sous la forme d'un levier 44 dans le mode de réalisation illustré aux figures 1 et 2. Ce levier 44 est lié en translation axiale avec le piston 26,34 en étant monté à articulation sur celui-ci. Il fait saillie par rapport au carter 10.

Plus précisément le levier 44 comporte un corps de levier 46 qui traverse la portion conique 13 de la paroi du carter d'embrayage 10 à travers une ouverture 48 ici de forme oblongue.

Plus précisément cette ouverture est allongée axialement parallèlement à l'axe X-X de coulissement du piston 26,34. Sa dimension est fonction des applications et notamment de l'usure des garnitures de friction du disque de friction.

Ici l'ouverture 48 est en forme de fenêtre rectangulaire comme visible dans les figures.

L'extrémité inférieure 50 du levier 44 située à l'intérieur du carter d'embrayage 10 est réalisée sous la forme d'une fourchette comportant deux bras 50A et 50B, qui sont reliés à articulation au corps 34 du piston en forme de manchon 26.

A cet effet, chacune des branches 50A, 50B de l'extrémité en forme de fourchette 50 est traversée par une vis 52A, 52B d'articulation dont l'extrémité filetée est vissée dans la partie supérieure du manchon 34 et dont le corps 56A, 56B traverse un perçage correspondant formé dans l'extrémité du bras de manière à constituer un axe d'articulation Y-Y du levier 44 sur le manchon 34, qui est décalé radialement vers l'extérieur par rapport à l'axe X-X de coulissement du piston 34.

La seconde extrémité 60 de l'organe d'indication d'usure en forme de levier 44 s'étend en saillie à l'extérieur du carter 10 de manière à constituer un curseur d'indication d'usure.

La position du levier (son inclinaison), varie donc en fonction du déplacement axial du piston 26 et de la butée 20.

Dans le mode de réalisation illustré aux figures 1 et 2, l'extrémité supérieure 60 de l'organe d'indication d'usure 44 se prolonge latéralement par un curseur 82 qui porte un patin de frottement 84 qui coopère avec une piste rhéostatique 86 en forme d'arc de cercle qui est sensiblement centrée sur le centre de la fenêtre 48 du carter, de manière à constituer un potentiomètre rhéostatique, qui transmet un signal, représentatif de la position angulaire de l'organe d'indication d'usure en forme de levier 44 par rapport au carter 10, à un dispositif d'affichage (non représenté).

Le potentiomètre 84, 86 permet donc d'évaluer les déplacements de l'organe d'indication d'usure 44, de déterminer les positions angulaires maximales qu'occupe ce dernier et d'en déduire ainsi la valeur de l'usure progressive des garnitures de friction de l'embrayage.

L'invention propose donc un dispositif de mesure indirecte de l'usure des garnitures de friction de l'embrayage en fonction de la position du piston 26, 34 attelé axialement à la butée de débrayage 20.

Ce dispositif s'étend en partie à l'extérieur du carter 10.

L'invention n'est pas limitée à la réalisation d'un potentiomètre rhéostatique, mais englobe tout dispositif d'indication de mesure faisant appel à la position relative de l'extrémité extérieure 60 de l'organe 44 par rapport au carter 10, ce dispositif pouvant être un simple dispositif d'affichage visuel de la position d'un curseur par rapport à une échelle de lecture, ou tout autre dispositif permettant d'établir un signal représentatif de l'usure des garnitures de friction en fonction de la position de l'organe 44.

Conformément à un autre aspect de l'invention, le levier 44 intègre une partie du circuit d'alimentation en fluide sous pression du piston 26, 34.

A cet effet, la branche 50A comporte un canal 64A d'alimentation en fluide sous pression dont une extrémité interne 66A est reliée à la chambre d'actionnement 38 et dont l'extrémité externe 68A est reliée, par un raccord 70A à une conduite de fluide sous pression 72 qui est elle-même reliée à un cylindre émetteur d'embrayage (non représenté).

L'extrémité 66A du canal 64A débouche dans une gorge radiale 74A du corps lisse de la vis 52A formant axe d'articulation, la gorge 74A étant elle-même reliée à un passage axial 76A formé dans la vis qui débouche dans un canal coaxial 78A formé dans le corps 34 du piston et qui débouche dans la chambre d'actionnement 38, dans la partie supérieure de celle-ci.

L'étanchéité du raccordement est assurée au moyen de deux joints toriques 80A.

La seconde branche 50B de l'extrémité inférieure 50 en forme de fourchette du levier 44 comporte également un canal longitudinal de purge 64B dont l'extrémité supérieure 68B est reliée à une vis de purge 70B et dont l'extrémité inférieure est reliée à la chambre 38 par un agencement identique à celui de l'extrémité intérieure 66A du canal d'alimentation 64A.

Grâce à cet aspect de l'invention, il ne subsiste plus de conduite souple à l'intérieur du carter d'embrayage et l'immobilisation en rotation du piston 26, 34 est également assurée de manière simple par l'intermédiaire du levier mécanique 44.

En effet le levier 44 est monté à jeu dans le sens axial (parallèle à l'axe Y-Y) dans la fenêtre 48 et avec jeu réduit dans l'autre sens (celui de la largeur) dans ladite fenêtre 48.

Enfin, et comme on l'a illustré en silhouette sur les figures 1 et 2, il est possible d'utiliser le levier d'indication d'usure 44 pour exercer une action mécanique externe sur son extrémité 60, en le faisant pivoter dans le sens horaire en considérant la figure 1 autour d'un point d'articulation résultant du contact de son corps 46 avec le bord correspondant de la fenêtre 48, et provoquer un déplacement axial du piston 34 de la droite vers la gauche selon la flèche F2 en considérant la figure 1.

Cette possibilité d'actionnement mécanique du piston 26, 34, par exemple par l'intermédiaire d'un outil 62 illustré en silhouette sur les figures, peut être utilisée lors de l'assemblage de l'embrayage afin d'assurer la solidarisation axiale de la bague intérieure 28, 30 avec la pièce d'accostage agissant sur le dispositif débrayeur de l'embrayage, le plus souvent les doigts d'un diaphragme, et ceci selon une technique d'emboîtement élastique axial telle que celle décrite et représentée dans le document FR-A-2.304.826.

Par exemple l'outil 62 peut être de forme creuse et coopérer de manière complémentaire avec l'extrémité 60, profilée pour ce faire, en étant enfilé sur celui-ci. On notera, en considérant la figure 2, que la fenêtre 48 permet un blocage en rotation du levier 44 de manière précitée et donc du piston 26,34. Elle permet également une ventilation de l'intérieur du carter.

Les coupelles d'étanchéité 40,42 sont ainsi protégées. Bien entendu, en considérant la figure 1, un jeu existe entre le levier 44 et la fenêtre 48 pour permettre un déplacement axial du piston 26,34 et de la butée 20. Le jeu est réduit dans le plan de la figure 2 pour permettre un blocage en rotation du levier 44.

Bien entendu le ressort de précharge, comme visible en pointillés à la figure 1, au lieu d'agir entre les deux coupelles 42,40 peut agir sur l'extrémité 60 du levier 44 de manière à solliciter le piston 26,34 constamment en direction de la paroi 12. Outre le bon fonctionnement du roulement de la butée 20, cette disposition évite des phénomènes de vibration au niveau du levier 44.

Bien entendu on prévoit des soufflets de protection (figure 1) entre la fenêtre 48 et l'extrémité supérieure 60 du levier 44.

Si besoin est, on peut prévoir une pièce en matière plastique, à faible coefficient de frottement, pour délimiter le contour de la fenêtre et réduire les bruits et les frottements au contact du levier 44.

Bien entendu l'ouverture oblongue 48 peut être allongée axialement et présenter à chacune de ses extrémités des bords arrondis.

D'une manière générale, cette ouverture 48 peut avoir une forme quelconque.

L'invention est applicable à un embrayage du type poussé dans lequel la bague tournante de la butée de débrayage agit en poussant sur l'extrémité des doigts du diaphragme des leviers de débrayage.

Bien entendu, comme décrit dans le document FR-A-2 304 826, la bague intérieure de la butée de débrayage 20 peut être attelée axialement au piston (liée en translation axiale au piston), tandis que la bague extérieure peut être tournante en étant montée par emboîtement axial sur sa pièce d'accostage associée.

La bague concernée peut être par exemple emmanchée à force sur l'extrémité du piston, qui est alors épaulé pour ce faire.

Enfin la première extrémité 50 de l'organe d'indication d'usure 44 peut ne comporter qu'un seul bras et s'étendre d'un côté du piston 26,34.

Bien entendu l'axe d'articulation Y-Y de l'organe d'indication d'usure peut ne pas être décalé radialement par rapport à l'axe X-X du piston 26, bien que cette disposition soit moins favorable pour la purge.

## Revendications

1. Embrayage à friction, notamment pour véhicule automobile, du type comportant un carter d'embrayage (10) à l'intérieur duquel est agencé un dispositif de commande du débrayage qui comporte une butée de débrayage (20) et un dispositif hydraulique d'actionnement (26, 34) comportant au moins un piston d'actionnement (26) qui est lié en translation axiale à la butée de débrayage (20) pour solliciter axialement en déplacement ladite butée dans lequel il est prévu un dispositif d'indication de l'usure des garnitures de friction de l'embrayage comportant un organe d'indication d'usure (44) qui est lié en translation axiale avec le piston d'actionnement (26, 34) caractérisé en ce que l'organe d'indication d'usure (44) est relié à articulation au piston d'actionnement (26) et fait saillie à l'extérieur du carter (10) à la faveur d'une ouverture (48) du carter (10) pour transmettre mécaniquement une information relative au déplacement du piston d'actionnement (26).

2. Embrayage selon la revendication 1, caractérisé en ce que l'ouverture (48) est de forme oblongue.

3. Embrayage selon la revendication 1 ou 2, caractérisé en ce qu'une première extrémité (50) de l'organe d'indication d'usure(44) est située à l'intérieur du carter d'embrayage (10) et est reliée à articulation au piston d'actionnement (26), et en ce que la seconde extrémité (60) de l'organe d'indication d'usure fait saillie à travers une fenêtre (48) du carter constituant l'ouverture (48) de celui-ci pour se déplacer en regard d'un organe (86) de mesure des déplacements de cette seconde extrémité (60, 82).

4. Embrayage selon la revendication 3, caractérisé en ce que l'organe de mesure est une échelle graduée de mesure visuelle des déplacements de la seconde extrémité (60, 82) de l'organe d'indication d'usure (44).

5. Embrayage selon la revendication 3, caractérisé en ce que la seconde extrémité de l'organe d'indication d'usure (44) comporte un frotteur (84) qui coopère avec un potentiomètre électrique (86) du type rhéostatique.

6. Embrayage selon l'une quelconque des revendications 1 à 5, caractérisé en ce que la première extrémité (50) de l'organe d'indication d'usure (44) est liée en translation axiale au piston (26) et est articulée sur ce dernier autour d'un axe d'articulation (Y-Y) perpendiculaire à l'axe (X-X) de coulissement axial du piston (26).

7. Embrayage selon la revendication 6 caractérisé en ce que l'axe d'articulation (Y-Y) de l'organe d'indication d'usure (44) est décalé radialement par rapport à l'axe (X-X) du piston (26).

8. Embrayage selon l'une quelconque des revendications 1 à 7, caractérisé en ce que la première extrémité (50) de l'organe d'indication d'usure (44) est en forme de fourchette (50A, 50B).

9. Embrayage selon l'une quelconque des revendications 1 à 8, caractérisé en ce que le dispositif hydraulique d'actionnement comporte un circuit d'alimentation en fluide sous pression comportant au moins une conduite d'alimentation qui relie la chambre d'actionnement (38) du piston (26, 34) à une source de fluide sous pression agencée à l'extérieur du carter (10), et en ce qu'au moins une partie (64A) de la conduite est formée dans le corps (46) de l'organe d'indication d'usure (44).

10. Embrayage selon la revendication 9, caractérisé en ce que le corps de l'organe d'indication d'usure (44) comporte un canal longitudinal (64A) dont une première extrémité (66A) est reliée à la chambre (38) d'actionnement du piston (26, 34) à travers des moyens (52A) d'articulation de la première extrémité (50A) de l'organe d'indication d'usure (44) sur le piston (26, 34).

11. Embrayage selon la revendication 10, caractérisé en ce que la seconde extrémité (68A) du canal (64A) débouche à l'extérieur du carter d'embrayage (10).

12. Embrayage selon l'une quelconque des revendications 9 à 11, caractérisé en ce que le circuit d'alimentation comporte une conduite de purge (64B) dont au moins une partie est formée dans le corps (46) de l'organe d'indication d'usure (44).

13. Embrayage selon l'une quelconque des revendications 1 à 12, caractérisé en ce que l'organe d'indication d'usure est un levier.

14. Embrayage selon la revendication 13, caractérisé en ce que le levier (44) intègre une partie du circuit d'alimentation en fluide sous pression du piston d'actionnement (26).

## Patentansprüche

1. Reibungskupplung, umfassend ein Kupplungsgehäuse (10), in dessen Innern eine Vorrichtung zur Ausrückbetätigung angeordnet ist, die ein Ausrücklager (20) und eine hydraulische Betätigungsvorrichtung (26, 34) enthält, umfassend mindestens einen Betätigungskolben (26), der axial geradlinig verschiebbar mit dem Ausrücklager (20) verbunden ist, um das besagte Ausrücklager axial auf Verschiebung zu beanspruchen, wobei eine Vorrichtung zur Anzeige des Verschleißes der Reibbeläge der Kupplung vorgesehen ist, die ein Verschleißanzeigeorgan (44) umfaßt, das axial geradlinig verschiebbar mit dem Betätigungskolben (26, 34) verbunden ist, **dadurch gekennzeichnet**, daß das Verschleißanzeigeorgan (44) gelenkig mit dem Betätigungskolben (26) verbunden ist und außerhalb (10) des Gehäuses durch eine Öffnung (48) des besagten Gehäuses (10) vorsteht, um mechanisch eine Information in bezug auf die Verschiebungen des Betätigungskolbens (26) zu übertragen.

2. Kupplung nach Anspruch 1, **dadurch gekennzeichnet**, daß die Öffnung (48) eine längliche Form hat.

3. Kupplung nach Anspruch 1 oder 2, **dadurch gekennzeichnet**, daß sich ein erstes Ende (50) des Verschleißanzeigeorgans (44) im Innern des Kupplungsgehäuses (10) befindet und gelenkig mit dem Betätigungskolben (26) verbunden ist und daß das zweite Ende (60) des Verschleißanzeigeorgans durch ein Fenster (48) des Gehäuses vorsteht, das die Öffnung (48) dieses Gehäuses bildet, um sich gegenüber einem Organ (86) zur Messung der Verschiebungen dieses zweiten Endes (60, 82) zu verschieben.

4. Kupplung nach Anspruch 3, **dadurch gekennzeichnet**, daß das Meßorgan eine Skala zur visuellen Messung der Verschiebungen des zweiten Endes (60, 82) des Verschleißanzeigeorgans (44) ist.

5. Kupplung nach Anspruch 3, **dadurch gekennzeichnet**, daß das zweite Ende des Verschleißanzeigeorgans (44) ein Schleifstück (84) umfaßt, das mit einem elektrischen Potentiometer (86) in Rheostatausführung zusammenwirkt.

6. Kupplung nach einem der Ansprüche 1 bis 5, **dadurch gekennzeichnet**, daß das erste Ende (50) des Verschleißanzeigeorgans (44) axial geradlinig verschiebbar mit dem Kolben (26) verbunden und an diesem um eine Gelenkachse (Y-Y) senkrecht zur axialen Verschiebungsachse (X-X) des Kolbens (26) angelenkt ist.

7. Kupplung nach Anspruch 6, **dadurch gekennzeichnet**, daß die Gelenkachse (Y-Y) des Verschleißanzeigeorgans (44) im Verhältnis zur Achse (X-X) des Kolbens (26) radial versetzt ist.

8. Kupplung nach einem der Ansprüche 1 bis 7, **dadurch gekennzeichnet**, daß das erste Ende (50) des Verschleißanzeigeorgans (44) in Form einer Gabel (50A, 50B) ausgeführt ist.

9. Kupplung nach einem der Ansprüche 1 bis 8, **dadurch gekennzeichnet**, daß die hydraulische Betätigungsvorrichtung einen Kreislauf für die Druckflüssiqkeitszufuhr enthält, der wenigstens eine Zuleitung umfaßt, die die Betätigungskammer (38) des Kolbens (26, 34) mit einer außerhalb des Gehäuses (10) angeordneten Druckflüssigkeitsquelle verbindet, und daß wenigstens ein Teil (64A) der Zuleitung im Körper (46) des Verschleißanzeigeorgans (44) ausgebildet ist.

10. Kupplung nach Anspruch 9, **dadurch gekennzeichnet,** daß der Körper des Verschleißanzeigeorgans (44) einen Längskanal (64A) enthält, dessen erstes Ende (66A) mit der Betätigungskammer (38) des Kolbens (26, 34) über die Gelenkmittel (52A) zur Anlenkung des ersten Endes (50A) des Verschleißanzeigeorgans (44) am Kolben (26, 34) verbunden ist.

11. Kupplung nach Anspruch 10, **dadurch gekennzeichnet**, daß das zweite Ende (68A) des Kanals (64A) außerhalb des Kupplungsgehäuses (10) mündet.

12. Kupplung nach einem der Ansprüche 9 bis 11, **dadurch gekennzeichnet**, daß der Zufuhrkreislauf eine Ablaßleitung (64B) umfaßt, von der wenigstens ein Teil im Körper (46) des Verschleißanzeigeorgans (44) ausgebildet ist.

13. Kupplung nach einem der Ansprüche 1 bis 12, **dadurch gekennzeichnet,** daß das Verschleißanzeigeorgan ein Hebel ist.

14. Kupplung nach Anspruch 13, **dadurch gekennzeichnet**, daß der Hebel (44) einen Teil des Kreislaufs für die Druckflüssigkeitszufuhr zum Betätigungskolben (26) enthält.

## Claims

1. A friction clutch, especially for a motor vehicle, of the type comprising a clutch casing (10), within which there is arranged a clutch control device which comprises a clutch release bearing (20) and a hydraulic actuating device (26, 34) comprising at least one actuating piston (26), which is coupled to the clutch release bearing (20) for axial straight line movement therewith, so as to urge the said release bearing in axial displacement, wherein a device is provided for indicating wear in the friction liners of the clutch and comprising a wear indicating member (44), which is coupled to the actuating piston (26, 34) for axial straight line movement therewith, characterised in that the wear indicating member (44) is articulated to the actuating piston (26) and projects outside the casing (10) via an aperture (48) in the casing (10), so as to transmit, mechanically, information relating to the displacement of the actuating piston (26).

2. A clutch according to Claim 1, characterised in that the aperture (48) is oblong.

3. A clutch according to Claim 1 or Claim 2, characterised in that a first end portion (50) of the wear indicating member (44) is situated inside the clutch casing (10) and is pivoted to the actuating piston (26), and in that the second end portion (60) of the wear indicating member projects through a window (48) of the casing constituting the aperture (48) of the latter, so as to be displaceable in relation to a member (86) for measuring displacements of the said second end portion (60, 82).

4. A clutch according to Claim 3, characterised in that the measuring member is a graduated visual scale for measurement of the displacements of the second end portion (60, 82) of the wear indicating member (44).

5. A clutch according to Claim 3, characterised in that the second end portion of the wear indicating member (44) comprises a friction element (84) which cooperates with an electrical potentiometer (86) of the rheostatic type.

6. A clutch according to any one of claims 1 to 5, characterised in that a first end portion (50) of the wear indicating member (44) is coupled to the piston (26) for axial straight line movement with it, and is pivoted on the latter about a pivot axis (Y-Y) at right angles to the axis (X-X) of axial sliding movement of the piston (26).

7. A clutch according to Claim 6, characterised in that the pivot axis (Y-Y) of the wear indicating member (44) is offset radially with respect to the axis (X-X) of the piston (26).

8. A clutch according to any one of Claims 1 to 7, characterised in that the first end portion (50) of the wear indicating member (44) is in the form of a fork (50A, 50B).

9. A clutch according to any one of Claims 1 to 8, characterised in that the hydraulic actuating device includes a pressurised fluid supply circuit comprising at least one feed duct which connects the actuating chamber (38) of the piston (26, 34) to a source of fluid under pressure arranged outside the casing (10), and in that at least part (64A) of the duct is formed in the body (46) of the wear indicating member (44).

10. A clutch according to Claim 9, characterised in that the body of the wear indicating member (44) includes a longitudinal duct (64A), a first end (66A) of which is connected to the actuating chamber (38) for the piston (26, 34) via means (52A) pivoting the first end portion (50A) of the wear indicating member (44) on the piston (26, 34).

11. A clutch according to Claim 10, characterised in that the second end portion (68A) of the duct (64A) is open outside the clutch casing (10).

12. A clutch according to any one of Claims 9 to 11, characterised in that the supply circuit includes a purge duct (64B), at least part of which is formed in the body (46) of the wear indicating member (44).

13. A clutch according to any one of Claims 1 to 12, characterised in that the wear indicating member is a lever.

14. A clutch according to Claim 13, characterised in that the lever (44) incorporates a part of the circuit for supplying pressurised fluid to the actuating piston (26).
